(19) **Europäisches Patentamt European Patent Office Office européen des brevets**

(11) **EP 2 477 402 B1**

(12) **FASCICULE DE BREVET EUROPEEN**

(45) Date de publication et mention de la délivrance du brevet:
**24.09.2014 Bulletin 2014/39**

(21) Numéro de dépôt: **11194776.8**

(22) Date de dépôt: **21.12.2011**

(51) Int Cl.:
*H04N 19/33* (2014.01)   *H04N 19/146* (2014.01)
*H04N 19/89* (2014.01)   *H04N 19/36* (2014.01)
*H04N 19/63* (2014.01)   *H04N 19/65* (2014.01)
*H04N 19/61* (2014.01)   *H04N 19/149* (2014.01)
*H04N 19/115* (2014.01)   *H04N 19/40* (2014.01)
*H04N 19/48* (2014.01)

(54) **Procédé et dispositif d'adaptation de débit d'un flux vidéo compressé transmis dans un environnement contraint**

Verfahren und Vorrichtung zur Adaptation des Durchsatzes eines komprimierten Videoflusses in einer eingeschränkten Übertragungsumgebung

Method and device for adapting the bitrate of a compressed video stream transmitted in a constrained environment

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1005077**

(43) Date de publication de la demande:
**18.07.2012 Bulletin 2012/29**

(73) Titulaire: **THALES**
**92200 Neuilly-sur-Seine (FR)**

(72) Inventeurs:
• **Gadat, Benjamin**
  **92704 COLOMBES Cedex (FR)**
• **Bergeron, Cyril**
  **92704 COLOMBES Cedex (FR)**
• **Poulliat, Charly**
  **92704 COLOMBES Cedex (FR)**
• **Gomez, Cécile**
  **92704 COLOMBES Cedex (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 494 482      FR-A1- 2 944 935**
**US-A1- 2003 202 579      US-A1- 2005 175 084**

• **QI WANG ET AL: "A new rate allocation scheme for progressive fine granular scalable coding", ISCAS 2001. THE 2001 IEEE INTERNATIONAL SYMPOSIUM ON CIRCUITS AND SYSTEMS, 6 - 9 MAY 2001, SYDNEY, NSW, AUSTRALIA; [IEEE INTERNATIONAL SYMPOSIUM ON CIRCUITS AND SYSTEMS], IEEE SERVICE CENTER, PISCATAWAY, NJ , USA, vol. 2, 6 mai 2001 (2001-05-06), pages 397-400, XP010540662, ISBN: 978-0-7803-6685-5**
• **T. TUITHUNG ET AL: "New Approaches for Video Transcoding in the Compressed Domain", 15TH INTERNATIONAL CONFERENCE ON ADVANCED COMPUTING AND COMMUNICATIONS (ADCOM 2007), 1 décembre 2007 (2007-12-01), pages 654-659, XP055002182, DOI: 10.1109/ADCOM. 2007.100 ISBN: 978-0-76-953059-8**
• **BERGERON C ET AL: "Modelling H.264/AVC sensivity for error protection in wireless transmissions", 2006 IEEE 8TH WORKSHOP ON MULTIMEDIA SIGNAL PROCESSING, MMSP'06, VICTORIA, CANADA, no. 8TH, 3 octobre 2006 (2006-10-03), pages 302-305, XP002592830, ISBN: 978-0-7803-9751-4**

**EP 2 477 402 B1**

**Description**

La présente invention porte sur un procédé et un dispositif d'adaptation de débit d'un flux vidéo compressé en vue d'une transmission sur un canal à débit contraint. Elle s'applique avantageusement à un flux vidéo pour lequel chaque image est compressée séparément des autres, c'est-à-dire sans prendre en compte les redondances temporelles pouvant exister et sans appliquer de méthodes de prédiction de mouvement. L'invention s'applique notamment aux flux vidéo compressés à l'aide des standards « Motion JPEG » ou « Motion JPEG 2000 ».

Dans la suite de la description, il sera fait référence au standard Motion JPEG2000 ou M-JPEG2000 étant entendu que l'invention s'applique de façon identique à tout codeur image ou vidéo similaire pour lequel chaque image est compressée séparément à l'intérieur du flux vidéo.

Un des problèmes que cherche à résoudre l'invention concerne l'adaptation des caractéristiques d'un flux compressé M-JPEG2000 aux contraintes d'un canal de transmission à débit limité, typiquement un canal de transmission radio. Un flux compressé délivré par un codeur JPEG2000 possède la capacité de regrouper, dans un même flux, plusieurs versions de la même image à différentes résolutions mais aussi à différents niveaux de qualité. On parle classiquement de scalabilité pour désigner la capacité d'un codeur source à produire, dans un unique flux, plusieurs versions de la même image accessibles pour l'utilisateur. En particulier, un flux compressé selon la norme M-JPEG2000 est un flux à multi résolutions spatiales. Il est classiquement composé de sous-bandes obtenues suite à l'application d'une transformée en ondelettes à une image. Chaque sous-bande représente l'image d'origine à une résolution inférieure. Connaissant le débit maximal disponible sur la liaison de transmission, il est possible d'adapter le flux compressé en supprimant certaines sous-bandes de façon à respecter le débit contraint. Le flux compressé résultant de cette adaptation aboutira, après décodage, à une image de résolution plus faible. Un problème à résoudre dans ce contexte concerne la sélection des sous-bandes à transmettre de façon à minimiser la distorsion induite sur l'image finale. L'adaptation de débit peut également être effectuée, à l'opposé, en augmentant le débit total du flux par application d'un code correcteur d'erreurs sur une ou plusieurs sous-bandes de façon à minimiser la distorsion résultant de l'impact d'erreurs de transmission sur ces sous-bandes.

De plus, les décodeurs M-JPEG permettent de mettre en oeuvre des techniques de masquage d'erreur s'appuyant sur la corrélation temporelle existant entre plusieurs images successives. Ainsi, certaines parties d'une image décodée peuvent être reconstruites à partir des informations présentes dans une ou plusieurs images antérieures dans le flux. La redondance temporelle existant entre certaines images successives peut être exploitée en amont afin de reconstruire à la résolution maximale une image reçue à une résolution inférieure.

On connait la demande de brevet française du Demandeur publiée sous le numéro FR2944935. Elle décrit un procédé d'estimation du débit et de la distorsion d'une image compressée par un codeur source de type JPEG2000. Ce procédé permet d'estimer la distorsion induite par l'impact d'erreurs de transmission sur certaines parties d'un flux compressé JPEG 2000. Par contre, elle ne prend pas en compte la capacité d'un décodeur M-JPEG 2000 à masquer les erreurs résultant de la perte entière d'une sous-bande à partir d'une compensation de mouvement entre une image clef et l'image reçue.

La présente invention propose un dispositif et un procédé permettant d'adapter finement le débit d'un flux compressé M-JPEG2000 en estimant l'impact final en termes de distorsion de la perte d'une sous-bande ou de la transmission d'une ou plusieurs images du flux à une résolution inférieure. L'invention prend en compte la capacité du décodeur à compenser les erreurs à partir de la corrélation temporelle entre deux images successives.

L'invention permet d'adapter le débit de chaque image pour minimiser la distorsion globale de la séquence vidéo.

L'invention est mise en oeuvre sur un flux compressé et peut être exécutée dans un dispositif de transcodage délocalisé du codeur source.

L'invention a notamment pour objet un procédé d'adaptation du débit d'un flux vidéo comportant une pluralité N d'images compressées $Ic_n$ à une pluralité de résolutions spatiales et/ou une pluralité de couches de qualité, lesdites images étant compressées séparément les unes des autres, caractérisé en ce qu'il comporte au moins les étapes suivantes :

- définir au moins une image clef $I_0$ parmi lesdites images que comporte le flux,
- pour chaque image compressée $Ic_n$ courante et pour chaque point de troncature k correspondant à une résolution spatiale et/ou une couche de qualité disponible pour cette image, exécuter les étapes suivantes :

  • tronquer ladite image compressée $Ic_n$ courante audit point de troncature k afin de produire une image compressée et tronquée $Ic^k_n$ consommant un débit $D^k_n$,
  • Décompresser l'image clef compressée $Ic_0$, l'image compressée $Ic_n$ courante et l'image compressée et tronquée $Ic^k_n$,
  • déterminer au moins une information de compensation de mouvement entre l'image clef tronquée ($I^k_0$) et l'image courante tronquée ($I^k_n$),

- appliquer la ou lesdites information(s) de compensation de mouvement à l'image clef ($I_0$) pour obtenir une image reconstruite ($IR_n$) à la résolution spatiale et/ou couche de qualité de l'image clef ($I_0$),
  - déterminer une estimée de la distorsion $\Delta^k_n$ entre l'image reconstruite $IR_n$ et l'image courante $I_n$ décompressée,
- déterminer pour toutes les images $I_n$ dudit flux vidéo, hormis la ou les images clefs $I_0$, les points de troncature $k^n_{opt}$ optimum qui N minimisent la somme des distorsions $\sum\limits_{n=1}^{N} \Delta_n^{k^n_{opt}}$ et qui respectent l'inégalité suivante

$$\sum\limits_{n=1}^{N} D_n^{k^n_{opt}} < D_{cible} - D_{I_0}$$ avec $D_{cible}$ le débit maximum que peut consommer le flux vidéo et $D_{I0}$ le débit consommé par la ou les images clefs $Ic_0$,

- produire un flux vidéo compressé adapté en débit, composé de la ou des images clefs $Ic_0$ et des images compressées et tronquées $Ic^k_n$ auxdits points de troncature $k^n_{opt}$ optimum.

Dans un aspect particulier de l'invention, les distorsions $\Delta^k_n$ sont déterminées par un calcul d'erreur quadratique moyenne ou de PSNR.

Dans une variante de réalisation le procédé selon l'invention comporte en outre les étapes suivantes :

- déterminer, pour chaque image compressée $Ic_n$ courante, pour chaque point de troncature k et pour chaque rendement $R_i$ de codes correcteurs, pris dans un ensemble de codes correcteurs donné, le débit $D_n^{i,k} = \dfrac{D_n^k}{R_i}$ consommé par ladite image compressée $Ic_n$ protégée par ledit code correcteur de rendement $R_i$,
- déterminer, pour chaque image compressée $Ic_n$ courante, pour chaque point de troncature k et pour chaque rendement $R_i$ de codes correcteurs, une estimée de la distorsion $\Delta^{i,k}_n$ entre d'une part une image reconstruite $IR_n$ à partir de l'image clef $I_0$ et de l'image compressée, tronquée $Ic^k_n$, protégée par ledit code correcteur et corrompue par des erreurs dont la probabilité d'apparition $P_{ae}$ est connue et d'autre part l'image courante $I_n$ décompressée,
- déterminer pour toutes les images $I_n$ dudit flux vidéo, hormis la ou les images clefs $I_0$, les codes correcteur de rendements optimum $R_{i^n_{opt}}$ qui minimisent la somme des distorsions $\sum\limits_{n=1}^{N} \Delta_n^{i^n_{opt},k^n_{opt}}$ et qui respectent l'inégalité suivante $\sum\limits_{n=1}^{N} D_n^{i^n_{opt},k^n_{opt}} < D_{cible} - D_{I_0}$ ,

- produire un flux vidéo compressé adapté en débit, composé de la ou des images clefs $Ic_0$ et des images compressées et tronquées $Ic^k_n$ auxdits points de troncature $k^n_{opt}$ optimum et protégées par les codes correcteurs de rendement optimum $R_{i^n_{opt}}$ .

Dans une variante de réalisation de l'invention, la distorsion $\Delta^{i,k}_n$ est déterminée à l'aide de la relation suivante $$\Delta_n^{i,k} = (1 - P_{ae}^i)^{T_{n,k,i}} \cdot \Delta_n^k + (1 - (1 - P_{ae}^i)^{T_{n,k,i}}) \cdot \Delta_{0,n}^k ,$$ avec $P^i_{ae}$ la probabilité d'apparition d'erreur donnée pour un rendement de code correcteur $R_i$ et un rapport signal à bruit cible, $T_{n,k,i}$ la taille, en bits, de l'image tronquée compressée $Ic^k_n$ protégée par le code correcteur de rendement $R_i$ et $\Delta^k_{0,n}$ la distorsion engendrée lorsque l'image tronquée compressée $Ic^k_n$ est totalement corrompue ou perdue.

Dans une variante de réalisation de l'invention, l'image clef $I_0$ est initialement choisie comme la première image dudit flux vidéo et est mise à jour à l'image courante $I_n$ lorsque la distorsion dépasse un seuil donné.

Dans une variante de réalisation de l'invention, les images dudit flux vidéo sont compressées à l'aide du standard M-jpeg 2000.

L'invention a également pour objet un dispositif d'adaptation de débit adapté à recevoir un flux vidéo comportant une pluralité d'images compressées $Ic_n$ à une pluralité de résolutions spatiales et à délivrer un flux vidéo compressé dont le débit est inférieur à un débit cible et dont la distorsion moyenne est minimisée, ledit dispositif comportant des moyens adaptés à mettre en oeuvre le procédé selon l'invention.

D'autres caractéristiques et avantages de l'invention apparaîtront à l'aide de la description qui suit faite en regard de dessins annexés qui représentent :

- la figure 1, un synoptique d'une chaine de transmission d'un flux vidéo compressé comportant un dispositif d'adaptation de débit selon l'invention,
- la figure 2, un organigramme illustrant le procédé selon un premier mode de réalisation de l'invention,
- la figure 3, un synoptique d'un dispositif d'adaptation de débit selon l'invention.

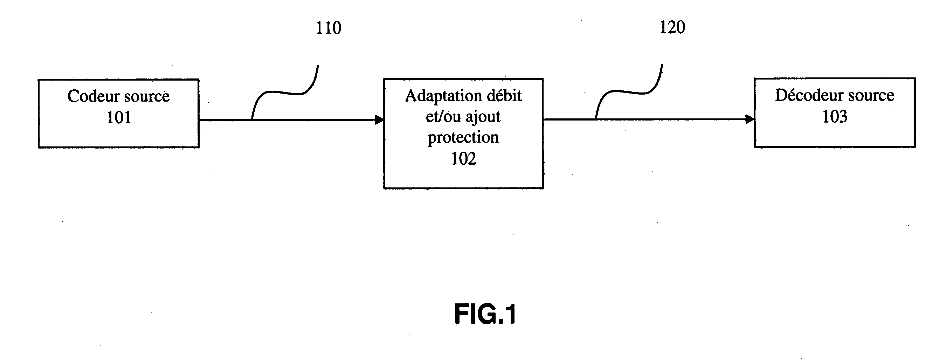

La figure 1 décrit un synoptique d'une chaine de transmission d'un flux vidéo compressé. Un codeur source 101 réalise la compression d'une séquence vidéo comportant une pluralité d'images. Cette compression est effectuée par exemple en respectant le standard M-JPEG ou M-JPEG2000. Le flux résultant compressé est transmis à travers un premier canal de propagation 110, avantageusement un canal filaire à débit non contraint puis est reçu par un dispositif 102, selon l'invention, d'adaptation du débit dudit flux compressé. Une telle adaptation est réalisée en diminuant le débit utile du flux par suppression de certaines de ses composantes ou/et en augmentant le débit total par insertion de données de redondance en vue de protéger telle ou telle partie du flux. Le dispositif 102 selon l'invention produit en sortie un flux compressé adapté qui est transmis sur un canal 120 de propagation à débit contraint. En bout de chaine, le flux est reçu par un décodeur source 103 qui réalise le décodage du flux compressé et éventuellement la reconstruction d'une partie du flux par masquage d'erreurs.

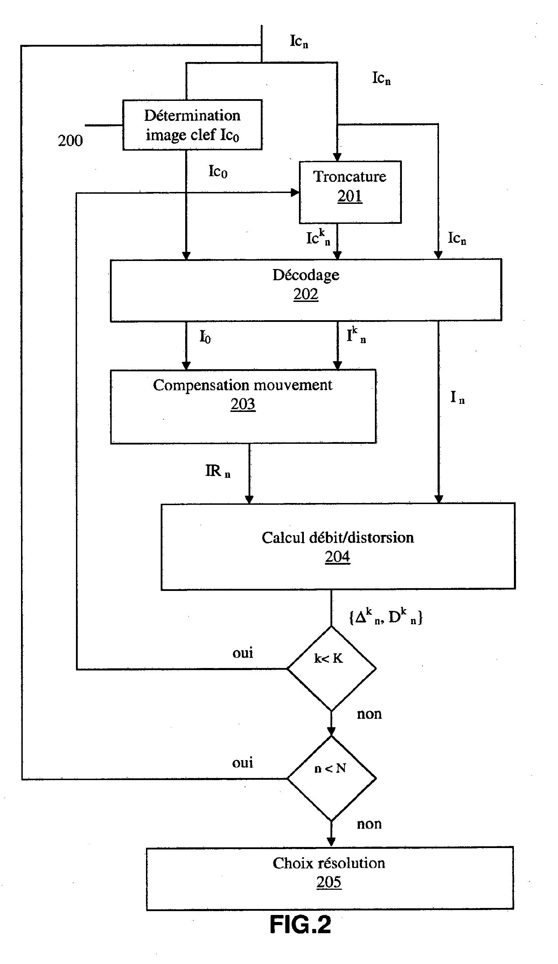

La figure 2 représente, sous forme d'un organigramme, le procédé selon l'invention mis en oeuvre par le dispositif 102 d'adaptation de débit. Dans une étape préalable 200, une image, parmi la pluralité d'images composant le flux vidéo reçu, est sélectionnée comme image clef $I_0$. Cette image est transmise intégralement et consomme un débit donné $D_{I0}$. L'image clef $I_0$ sert par la suite d'image référence pour estimer le mouvement entre cette image et une image ultérieure dans le flux. Dans un mode particulier de l'invention, l'image clef est choisie initialement comme étant la première du flux vidéo puis est mise à jour au cours du procédé selon des modalités décrites ultérieurement.

Le procédé selon l'invention vise notamment à adapter le débit transmis pour chaque image compressée. Pour une image $I_n$ ultérieure à l'image clef $I_0$ au sein du flux, une étape de troncature 201 est appliquée. L'image compressée $Ic_n$ est composée, notamment, d'une pluralité de sous-bandes chacune relative à une résolution spatiale ou une couche de qualité donnée. L'étape de troncature 201 consiste à supprimer une ou plusieurs sous-bandes du flux compressé, ou tout autre élément équivalent du flux compressé, dans le but de produire un flux compressé contenant l'image originale à une résolution spatiale différente et/ou avec un niveau de qualité différent. Par la suite l'indice k désignera un point de troncature associé à une résolution spatiale particulière et/ou une couche de qualité parmi celles disponibles effectivement dans le flux compressé correspondant à l'image $Ic_n$. Cet indice est utilisé à des fins purement descriptives et ne présume pas d'une hiérarchie particulière dans les résolutions spatiales ou les couches de qualités. Par souci de simplicité, l'invention est à présent décrite en considérant uniquement une troncature du flux aboutissant à une variation de la résolution spatiale. L'étape 201 consiste à tronquer une ou plusieurs sous bandes de l'image compressée $Ic_n$, de façon à ce que l'image compressée tronquée $Ic^k_n$ corresponde à une image décodée de résolution k.

Dans une étape 202, l'image clef compressée $Ic_0$, l'image compressée $Ic_n$ et l'image compressée tronquée $Ic^k_n$ sont décodées de façon à produire une image clef $I_0$ décodée, une image $I_n$ courante décodée et une image $I^k_n$ courante décodée à la résolution spatiale k.

Dans une étape 203, une estimation et une compensation de mouvement est réalisée entre l'image clef $I^k_0$ et l'image courante $I^k_n$ tronquées à la résolution spatiale k. Une ou plusieurs informations de compensation de mouvement peuvent être générées pour une ou plusieurs zones de l'image. Une image reconstruite $IR_n$ à la résolution n la plus élevée est ensuite obtenue en appliquant la ou les informations de compensation de mouvement à l'image clef $I_0$, préalablement adaptées à la résolution n par suréchantillonnage. Si le mouvement entre l'image clef $I_0$ et l'image courante $I_n$ est faible ou homogène dans un nombre limité de zones de l'image alors l'étape 203 de compensation de mouvement permet de générer une image reconstruite $IR_n$ très proche de l'image courante $I_n$ à la résolution spatiale la plus élevée, c'est-à-dire celle de l'image clef $I_0$. Au contraire si le mouvement entre les deux images est important ou quasi-aléatoire alors l'image reconstruite $IR_n$ présentera une distorsion élevée avec l'image courante $I_n$. Avantageusement, la méthode utilisée pour estimer et compenser le mouvement est la même que celle réalisée in fine par le décodeur 103. Toute méthode connue permettant d'estimer le mouvement entre deux images d'un flux vidéo et permettant de produire un vecteur de compensation de mouvement est compatible de l'invention.

Dans une étape 204, une distorsion $\Delta^k_n$ est calculée entre l'image $IR_n$ reconstruite à partir de l'image courante $I^k_n$ décodée à la résolution associée d'indice k et l'image courante $I_n$. A cette distorsion est associé le débit utile $D^k_n$ de l'image compressée tronquée $Ic^k_n$. La distorsion $\Delta^k_n$ est, par exemple, prise égale à l'erreur quadratique moyenne entre les deux images ou à la mesure du PSNR (« Peak Signal to Noise Ratio »). La distorsion $\Delta^k_n$ est calculée à partir de l'image $IR_n$ reconstruite après compensation de mouvement car, in fine, le décodeur 103 réalisera également cette étape de compensation de mouvement, encore appelée étape de masquage d'erreur, et l'image décodée produite sera l'image $IR_n$ et non l'image $I^k_n$ tronquée à une résolution inférieure.

Les étapes 201,202,203,204 sont réitérées pour l'ensemble K des sous bandes disponibles pour la compression de l'image courante $I_N$.

Lorsque tous les couples $\{\Delta^k_n, D^k_n\}$ de distorsion et débit ont été calculés pour une image, le procédé est réitéré pour l'ensemble N des images qui composent le flux.

Dans une étape finale 205, un choix d'adaptation de débit est réalisé en sélectionnant le point de troncature, d'indice $k^n_{opt}$ le plus optimum pour chaque image du flux. Cette sélection est réalisée de façon à minimiser la somme des distorsions estimées à l'étape 204 pour chaque image tout en garantissant que le débit total du flux compressé est inférieur à un débit maximum égal au débit disponible sur le lien de transmission moins le débit $D_{10}$ consommé par l'image clef $I_0$ éventuellement compressée faiblement. L'étape 205 consiste donc à déterminer l'ensemble des indices

$\{ k^n_{opt} \}$ pour n variant entre 1 et N qui minimise la somme $\sum\limits_{n=1}^{N} \Delta^{k^n_{opt}}_n$ tout en respectant l'inégalité

$\sum\limits_{n=1}^{N} D^{k^n_{opt}}_n < D_{cible} - D_{I_0}$. La détermination de l'ensemble d'indices $\{ k^n_{opt} \}$ est, par exemple, réalisé en énumérant toutes les configurations possibles des sommes $\sum\limits_{n=1}^{N} \Delta^k_n$ et $\sum\limits_{n=1}^{N} D^k_n$ et en sélectionnant l'ensemble qui respecte les contraintes d'optimisation précitées.

Les images compressées tronquées $Ic^k_n$ aux résolutions et/ou aux couches de qualité associées à l'indice k= $k^n_{opt}$ sont choisies pour être transmises à travers le canal de propagation vers leur destination.

L'image clef $I_0$ qui est, par exemple, la première image du flux vidéo considéré, peut être mise à jour au cours du déroulement du procédé. Le choix d'une nouvelle image clef $I_0$ peut être déterminé par une entité externe au procédé et peut être modifié à tout instant. Si l'image courante $I_n$ est définie comme image clef, alors elle remplace l'image clef précédente $I_0$ et le procédé se poursuit de la façon décrite.

Dans une variante de réalisation de l'invention, l'image clef est mise à jour lorsque la distorsion moyenne, sur l'ensemble des résolutions disponibles, entre l'image courante $I_n$ et l'image reconstruite $IR_n$ est supérieure à un seuil donné. Lorsque ce seuil est dépassé, l'image courante $I_n$ devient l'image clef $I_0$.

Dans une autre variante de réalisation de l'invention (non représentée à la figure 2), le procédé détermine en outre le rendement du code correcteur à appliquer sur l'image compressée tronquée en fonction d'une consigne de rapport signal à bruit sur le canal de transmission. En effet si la consigne de débit de transmission est suffisante, il peut être avantageux d'augmenter le débit du flux compressé par ajout de données de redondance de façon à protéger ce flux contre les erreurs de transmission et ainsi minimiser la distorsion de l'image décodée.

Dans une étape supplémentaire 204bis (non représentée à la figure 2), le calcul du couple débit/distorsion est effectué en outre pour plusieurs rendements de code correcteurs appliqué à chaque point de troncature d'indice k et chaque image d'indice n. Soit $R_i$ le rendement d'un code correcteur, parmi les $N_R$ codes correcteurs disponibles, appliqué à l'image compressée tronquée $Ic^k_n$. L'indice i est utilisé pour identifier un rendement $R_i$ parmi ceux disponibles. L'indice i peut prendre des valeurs entières entre 1 et le nombre de rendements disponibles $N_R$. Le débit total consommé par cette image compressée tronquée est alors égal à $D^{i,k}_n = \dfrac{D^k_n}{R_i}$. La distorsion est recalculée également en prenant en compte l'impact des erreurs de transmission engendrées par un canal de propagation qui présente une probabilité d'apparition d'erreur $P^i_{ae}$ donnée pour un rendement de code correcteur $R_i$ et un rapport signal à bruit cible. La probabilité d'apparition d'erreur peut être estimée à partir de courbes de probabilité d'erreur du code correcteur en fonction du rapport signal à bruit sur un canal gaussien. Elle peut également être mesurée par des moyens externes à l'invention. La distorsion entre l'image reconstruite $IR_n$ et l'image courante $I_n$ en prenant en compte la probabilité d'apparition d'erreur

$P^i_{ae}$ peut s'exprimer à l'aide de la relation suivante $\Delta^{i,k}_n = (1 - P^i_{ae})^{T_{n,k,i}} . \Delta^k_n + (1 - (1 - P^i_{ae})^{T_{n,k,i}}) . \Delta^k_{0,n}$ avec $T_{n,k,i}$ la taille, en bits, de l'image tronquée compressée $Ic^k_n$ protégée par le code correcteur de rendement $R_i$, $\Delta^k_n$ est la distorsion précédemment calculée à l'étape 204 lorsque l'impact des erreurs de transmission n'est pas pris en compte et $\Delta^k_{0,n}$ est la distorsion engendrée lorsque l'image tronquée compressée $Ic^k_n$ est totalement corrompue ou perdue.

L'étape 204bis du procédé selon l'invention aboutit donc, après itération sur l'ensemble des codes correcteurs disponibles, à une liste de couples distorsion et débit $\{\Delta^{i,k}_n, D^{i,k}_n\}$ pour chaque image d'indice n, chaque résolution spatiale d'indice k et chaque code correcteur d'indice i.

L'étape 205 est ensuite adaptée pour déterminer, pour chaque image, non seulement le point de troncature optimum $k^n_{opt}$ mais également le rendement de code correcteur optimal $i^n_{opt}$ afin de minimiser la distorsion totale

$$\sum_{n=1}^{N} \Delta_n^{i^n_{opt}, k^n_{opt}}$$ sur le flux vidéo tout en respectant la contrainte de débit cible donnée par l'inégalité

$$\sum_{n=1}^{N} D_n^{i^n_{opt}, k^n_{opt}} < D_{cible} - D_{I_0} \cdot$$ L'étape 205 abouti à la détermination de l'ensemble des couples d'indices $\{k^n_{opt}, i^n_{opt}\}$. Les images compressées tronquées $Ic^k_n$ aux points de troncature $k = k^n_{opt}$ et protégées par un code correcteur $R_i$ d'indice $i = i^n_{opt}$ sont choisies pour être transmises à travers le canal de propagation vers leur destination.

Les codes correcteurs utilisés peuvent être des codes convolutifs ou des codes en blocs, systématiques. Leur rendement doit être déterminable ainsi que la probabilité d'apparition d'erreur pour un flux binaire protégé par un tel code correcteur et transmis sur un canal de propagation de rapport signal à bruit connu. Ils peuvent être intégrés dans le flux compressé en utilisant les marqueurs de redondance fournis par la norme JPWL (partie 11 du standard JPEG 2000).

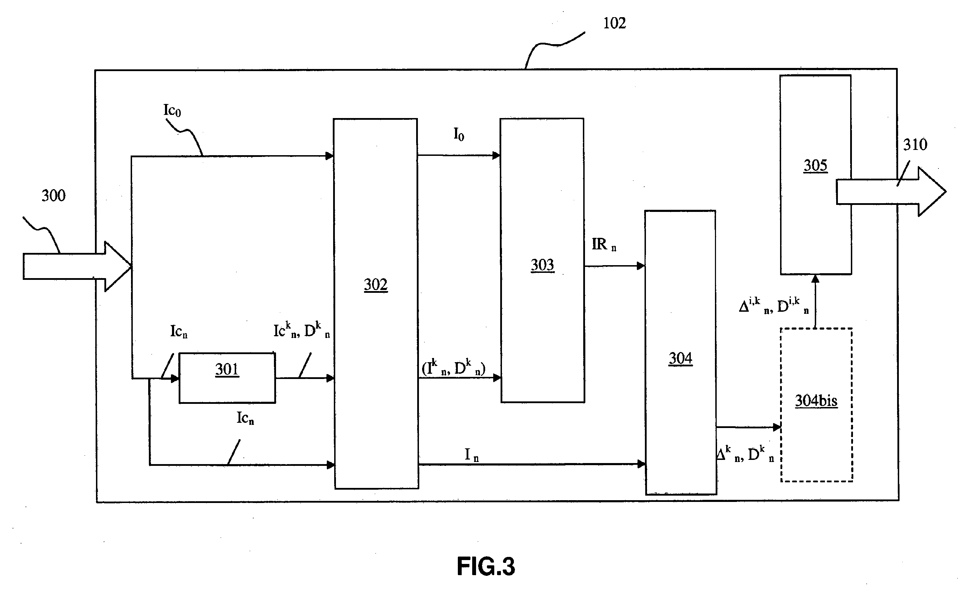

La figure 3 représente un synoptique du dispositif d'adaptation de débit 102 selon l'invention. Le dispositif 102 reçoit un flux vidéo compressé 300 transmis par un codeur source 101 et produit en sortie un flux vidéo compressé 310 dont le débit est adapté au débit cible du canal de propagation 120 par troncature d'une partie des résolutions spatiales et optionnellement par application d'un code correcteur d'erreurs.

Le dispositif 102 selon l'invention comporte des moyens adaptés à la mise en oeuvre du procédé selon l'invention. Une image clef $I_0$ est déterminée soit par des moyens extérieurs à l'invention soit par les moyens propres à l'invention décrits précédemment. Un dispositif de troncature 301 délivre, à partir d'une image compressée $Ic_n$, une image compressée tronquée $Ic^k_n$ à la résolution spatiale et/ou la couche de qualité correspondant au point de troncature d'indice k ainsi que son débit $D^k_n$ associé. Un décodeur source 302 réalise la décompression de l'image clef $Ic_0$, de l'image compressée courante $Ic_n$ et de l'image compressée tronquée $Ic^k_n$. Un dispositif 303 d'estimation et de compensation de mouvement produit, à partir de l'image clef décompressée $I_0$ et de l'image $I^k_n$ tronquée au point de troncature k, une image reconstruite $IR_n$ à la résolution spatiale la plus élevée, c'est-à-dire celle de l'image clef. Le dispositif 303 est avantageusement identique aux moyens mis en oeuvre par le décodeur source 103 pour réaliser un masquage d'erreurs sur une image décompressée. La distorsion $\Delta^k_n$ entre l'image courante $I_n$ et l'image reconstruite $IR_n$ est déterminée, pour chaque image $I_n$ et chaque point de troncature k envisagé par des moyens de calcul 304. Dans une variante de réalisation de l'invention, une nouvelle distorsion $\Delta^{i,k}_n$ et un nouveau débit $D^{i,k}_n$ sont déterminés, par des moyens de calcul 304bis confondus ou non avec les moyens de calcul 304, pour chaque rendement $R_i$ de code correcteur appliqué à l'image compressée tronquée $Ic^k_n$. Des moyens 305 de résolution numérique déterminent l'ensemble optimum, selon l'invention, de points de troncature et de rendements de code d'indices $\{k^n_{opt}, i^n_{opt}\}$ qui permettent de minimiser la distorsion moyenne sur le flux vidéo composé de l'ensemble des images compressées séparément tout en respectant la consigne de débit maximum disponible sur le canal de transmission. Le flux vidéo compressé adapté 310 est composé des images compressées tronquées $Ic^k_n$ aux points de troncature $k^n_{opt}$ déterminés par les moyens de résolution 305 et optionnellement protégées par les codes correcteurs de rendement $R_i$, avec $i = i^n_{opt}$, également déterminés par les moyens 305. Le flux 310 est ensuite transmis vers sa destination.

Sans sortir du cadre de l'invention et comme indiqué ci-dessus, la décomposition du flux compressé 300 en sous-bandes associées à des résolutions spatiales différentes peut être remplacée, sans aucune modification du procédé selon l'invention, par une décomposition en paquets associés à différents niveaux de qualité pour la même image. La troncature du flux effectuée à l'étape 301 n'aura alors pas pour effet de faire varier la résolution spatiale de l'image mais de faire varier son niveau de qualité.

## Revendications

**1.** Procédé d'adaptation du débit d'un flux vidéo (300) comportant une pluralité N d'images compressées ($Ic_n$) à une pluralité de résolutions spatiales et/ou une pluralité de couches de qualité, lesdites images étant compressées séparément les unes des autres, **caractérisé en ce qu'**il comporte au moins les étapes suivantes :

- définir au moins une image clef ($I_0$) parmi lesdites images que comporte le flux,
- pour chaque image compressée ($Ic_n$) courante et pour chaque point de troncature (k) correspondant à une résolution spatiale et/ou une couche de qualité disponible pour cette image, exécuter les étapes suivantes :

    • tronquer (301) ladite image compressée ($Ic_n$) courante audit point de troncature (k) afin de produire une image compressée et tronquée ($Ic^k_n$) consommant un débit ($D^k_n$),
    • décompresser (302) l'image clef compressée ($Ic_0$), l'image compressée ($Ic_n$) courante et l'image compressée et tronquée ($Ic^k_n$),
    • déterminer (303) au moins une information de compensation de mouvement entre l'image clef tronquée audit point de troncature ($I^k_0$) et l'image courante tronquée ($I^k_n$),
    • appliquer la ou lesdites information(s) de compensation de mouvement à l'image clef ($I_0$) pour obtenir une image reconstruite ($IR_n$) à la résolution spatiale et/ou couche de qualité de l'image clef ($I_0$),
    • déterminer (304) une estimée de la distorsion ($\Delta^k_n$) entre l'image reconstruite ($IR_n$) et l'image courante ($I_n$) décompressée,

- déterminer (305) pour toutes les images ($I_n$) dudit flux vidéo (300), hormis la ou les images clefs ($I_0$), les points de troncature ($k^n_{opt}$) optimum qui minimisent la somme des distorsions $\sum_{n=1}^{N} \Delta_n^{k^n_{opt}}$ et qui respectent l'inégalité suivante $\sum_{n=1}^{N} D_n^{k^n_{opt}} < D_{cible} - D_{I_0}$ avec $D_{cible}$ le débit maximum que peut consommer le flux vidéo (300) et $D_{I0}$ le débit consommé par la ou les images clefs ($Ic_0$),
- produire un flux vidéo compressé (310) adapté en débit, composé de la ou des images clefs ($Ic_0$) et des images compressées et tronquées ($Ic^k_n$) auxdits points de troncature ($k^n_{opt}$) optimum.

2. Procédé selon la revendication 1 **caractérisé en ce que** les distorsions ($\Delta^k_n$) sont déterminées par un calcul d'erreur quadratique moyenne ou de PSNR.

3. Procédé selon l'une des revendications 1 ou 2 **caractérisé en ce qu'**il comporte en outre les étapes suivantes :

- déterminer (304bis), pour chaque image compressée ($Ic_n$) courante, pour chaque point de troncature (k) et pour chaque rendement ($R_i$) de codes correcteurs, pris dans un ensemble de codes correcteurs donné, le débit $D_n^{i,k} = \dfrac{D_n^k}{R_i}$ consommé par ladite image compressée ($Ic_n$) protégée par ledit code correcteur de rendement ($R_i$),
- déterminer (304bis), pour chaque image compressée ($Ic_n$) courante, pour chaque point de troncature (k) et pour chaque rendement ($R_i$) de codes correcteurs, une estimée de la distorsion ($\Delta^{i,k}n$) entre d'une part une image reconstruite ($IR_n$) à partir de l'image clef ($I_0$) et de l'image compressée, tronquée ($Ic^k_n$), protégée par ledit code correcteur et corrompue par des erreurs dont la probabilité d'apparition $P_{ae}$ est connue et d'autre part l'image courante ($I_n$) décompressée,
- déterminer (305) pour toutes les images ($I_n$) dudit flux vidéo (300), hormis la ou les images clefs ($I_0$), les codes correcteur de rendements optimum $R_{i^n_{opt}}$ qui minimisent la somme des distorsions $\sum_{n=1}^{N} \Delta_n^{i^n_{opt}, k^n_{opt}}$ et qui respectent l'inégalité suivante $\sum_{n=1}^{N} D_n^{i^n_{opt}, k^n_{opt}} < D_{cible} - D_{I_0}$,
- produire un flux vidéo compressé (310) adapté en débit, composé de la ou des images clefs ($Ic_0$) et des images compressées et tronquées ($Ic^k_n$) auxdits points de troncature ($k^n_{opt}$) optimum et protégées par les codes correcteurs de rendement optimum $R_{i^n_{opt}}$.

4. Procédé selon la revendication 3 **caractérisé en ce que** la distorsion ($\Delta^{i,k}_n$) est déterminée à l'aide de la relation

suivante

$$\Delta_n^{i,k} = (1 - P_{ae}^i)^{T_{n,k,i}} \Delta_n^k + (1 - (1 - P_{ae}^i)^{T_{n,k,i}}).\Delta_{0,n}^k,$$ avec $P_{ae}^i$ la probabilité d'apparition d'erreur donnée pour un rendement de code correcteur $R_i$ et un rapport signal à bruit cible, $T_{n,k,i}$ la taille, en bits, de l'image tronquée compressée $Ic_n^k$ protégée par le code correcteur de rendement $R_i$ et $\Delta_{0,n}^k$ la distorsion engendrée lorsque l'image tronquée compressée $Ic_n^k$ est totalement corrompue ou perdue.

5. Procédé selon l'une des revendications précédentes **caractérisé en ce que** l'image clef ($I_0$) est initialement choisie comme la première image dudit flux vidéo (300) et est mise à jour à l'image courante ($I_n$) lorsque la distorsion ($\Delta_n^k$, $\Delta_n^{i,k}$) dépasse un seuil donné.

6. Procédé selon l'une des revendications précédentes **caractérisé en ce que** les images dudit flux vidéo (300) sont compressées à l'aide du standard M-jpeg 2000.

7. Dispositif (102) d'adaptation de débit adapté à recevoir un flux vidéo (300) comportant une pluralité d'images compressées ($Ic_n$) à une pluralité de résolutions spatiales et à délivrer un flux vidéo (310) compressé dont le débit est inférieur à un débit cible et dont la distorsion moyenne est minimisée, ledit dispositif (102) comportant des moyens adaptés à mettre en oeuvre le procédé selon l'une des revendications 1 à 6.

**Patentansprüche**

1. Verfahren zur Adaptation des Durchsatzes eines Videoflusses (300), der eine Vielzahl N komprimierter Bilder ($Ic_n$) in einer Vielzahl räumlicher Auflösungen und/oder einer Vielzahl von Qualitätsschichten aufweist, wobei die Bilder voneinander getrennt komprimiert sind, **dadurch gekennzeichnet, dass** es mindestens die folgenden Schritte aufweist:

   - Definieren mindestens eines Schlüsselbilds ($I_0$) von den Bildern, die der Fluss aufweist,
   - Ausführen für jedes laufende komprimierte Bild ($Ic_n$) und für jeden Abschneidepunkt (k), der einer räumlichen Auflösung und/oder einer für dieses Bild verfügbaren Qualitätsschicht entspricht, der folgenden Schritte:

      • Abschneiden (301) des laufenden komprimierten Bilds ($Ic_n$) am Abschneidepunkt (k), um ein komprimiertes und abgeschnittenes Bild ($Ic_n^k$) zu produzieren, das einen Durchsatzes ($D_n^k$) verbraucht,
      • Dekomprimieren (302) des komprimierten Schlüsselbilds ($Ic_0$), des laufenden komprimierten Bilds ($Ic_n$) und des komprimierten und abgeschnittenen Bilds ($Ic_n^k$),
      • Bestimmen (303) mindestens einer Bewegungskompensationsinformation zwischen dem am Abschneidepunkt abgeschnittenen Schlüsselbild ($I_0^k$) und dem laufenden abgeschnittenen Bild ($I_n^k$),
      • Anwenden der Bewegungskompensationsinformation(en) auf das Schlüsselbild ($I_0$), um ein wiederhergestelltes Bild ($IR_n$) in der räumlichen Auflösung und/oder Qualitätsschicht des Schlüsselbilds ($I_0$) zu erhalten,
      • Bestimmen (304) einen Schätzwert der Verzerrung ($\Delta_n^k$) zwischen dem wiederhergestellten Bild ($IR_n$) und dem laufenden dekomprimierten Bild ($In$),

   - Bestimmen (305) für alle Bilder ($I_n$) des Videoflusses (300), außer für das oder die Schlüsselbilder ($I_0$), der optimalen Abschneidepunkte ($k_{opt}^n$), die die Summe der Verzerrungen $\sum_{n=1}^{N} \Delta_n^{k_{opt}^n}$ minimieren und die die folgende Ungleichheit $\sum_{n=1}^{N} D_n^{k_{opt}^n} <$ · mit $D_{Ziel}$ als maximalen Durchsatz, den der Videofluss (300) verbrauchen kann, und $D_{I0}$ als von dem oder den Schlüsselbildern ($Ic_0$) verbrauchten Durchsatz, respektieren,
   - Produzieren eines aus dem oder Schlüsselbildern ($Ic_0$) und an den optimalen Abschneidepunkten ($k_{opt}^n$) komprimierten und abgeschnittenen Bildern ($Ic_n^k$) zusammengesetzten durchsatzadaptierten komprimierten Videoflusses (310).

**2.** Verfahren nach Anspruch 1, **dadurch gekennzeichnet, dass** die Verzerrungen ($\Delta^k_n$) durch eine Berechnung des mittleren quadratischen Fehler oder des PSNR bestimmt werden.

**3.** Verfahren nach einem der Ansprüche 1 oder 2, **dadurch gekennzeichnet, dass** es ferner die folgenden Schritte umfasst:

- Bestimmen (304bis) für jedes laufende komprimierte Bild ($Ic_n$), für jeden Abschneidepunkt (k) und für jede Korrekturcodeleistung ($R_i$), herangezogen aus einer bestimmten Korrekturcodegruppe, des Durchsatzes

$$D_n^{i,k} = \frac{D_n^k}{R_i},$$

der von dem von der Korrekturcodeleistung ($R_i$) geschützten komprimierten Bild ($Ic_n$) verbraucht wird,

- Bestimmen (304bis) für jedes laufende komprimierte Bild ($Ic_n$), für jeden Abschneidepunkt (k) und für jede Korrekturcodeleistung ($R_i$) eines Schätzwerts der Verzerrung ($\Delta^{i,k}_n$) zwischen einerseits einem aus dem Schlüsselbild ($I_0$) und dem komprimierten, abgeschnittenen Bild ($Ic^k_n$), von dem Korrekturcode geschützten und von Fehlern, deren Auftretenswahrscheinlichkeit $P_{ae}$ bekannt ist, korrumpierten wiederhergestellten Bild ($IR_n$) und andererseits dem laufenden dekomprimierten Bild ($I_n$),

- Bestimmen (305) für alle Bilder ($I_n$) des Videoflusses (300), außer für das oder die Schlüsselbilder ($I_0$), der optimalen Korrekturcodeleistungen $R^n_{i_{opt}}$, die Summe der Verzerrungen $\sum_{n=1}^{N} \Delta_n^{i^n_{opt}, k^n_{opt}}$ minimieren

und die die folgende Ungleichheit $\sum_{n=1}^{N} D_n^{i^n_{opt}, k^n_{opt}} <$ respektieren,

- Produzieren eines komprimierten durchsatzadaptieren Videoflusses (310), der aus dem oder Schlüsselbildern ($Ic_0$) und komprimierten und an den optimalen Abschneidepunkten ($k^n_{opt}$) abgeschnittenen und von den optimalen Korrekturcodeleistungen $R^n_{i_{opt}}$ geschützten Bildern ($Ic^k_n$) zusammengesetzt ist.

**4.** Verfahren nach Anspruch 3, **dadurch gekennzeichnet, dass** die Verzerrung ($\Delta^{i,k}_n$) mit Hilfe der folgenden Relation

$$\Delta_n^{i,k} = \left(1 - P_{ae}^i\right)^{T_{n,k,i}} \Delta_n^k + \left(1 - \left(1 - P_{ae}^i\right)^{T_{n,k,i}}\right) . \Delta_{0,n}^k$$ bestimmt wird, wobei $P^i_{ae}$ die für eine Korrekturcodeleistung $R_i$ und ein Verhältnis Signal zu Zielrauschen bestimmte Fehlerauftretenswahrscheinlichkeit ist, $T_{n,k,i}$ die Größe in Bits des abgeschnittenen komprimierten, von der Korrekturcodeleistung $R_i$ geschützten Bilds $Ic^k_n$ ist und $\Delta^k_{0,n}$ die hervorgerufene Verzerrung ist, wenn das abgeschnittene komprimierte Bild $Ic^k_n$ vollkommen korrumpiert oder verloren ist.

**5.** Verfahren nach einem der vorangehenden Ansprüche, **dadurch gekennzeichnet, dass** das Schlüsselbild ($I_0$) anfänglich als das erste Bild des Videoflusses (300) gewählt wird und mit dem laufenden Bild ($I_n$) aktualisiert wird, wenn die Verzerrung $\Delta^k_n$, $\Delta^{i,k}_n$) einen bestimmten Wert überschreitet.

**6.** Verfahren nach einem der vorangehenden Ansprüche, **dadurch gekennzeichnet, dass** die Bilder des Videoflusses (300) mit Hilfe des Standards M-jpeg 2000 komprimiert werden.

**7.** Vorrichtung (102) zur Adaptation des Durchsatzes, die für den Empfang eines Videoflusses (300), der eine Vielzahl komprimierter Bilder ($Ic_n$) in einer Vielzahl räumlicher Auflösungen aufweist, und die Bereitstellung eines komprimierten Videoflusses (310), dessen Durchsatz kleiner als ein Zieldurchsatz ist und dessen mittlere Verzerrung minimiert ist, adaptiert ist, wobei die Vorrichtung (102) Mittel aufweist, die für die Umsetzung des Verfahrens nach einem der Ansprüche 1 bis 6 adaptiert sind.

**Claims**

**1.** A method for adapting the bitrate of a video stream (300) comprising a plurality N of compressed images ($Ic_n$) with

a plurality of spatial resolutions and/or a plurality of quality layers, said images being compressed separately from each other, **characterised in that** it comprises at least the following steps:

- defining at least one key image ($I_0$) from among said images that comprise said stream;
- executing, for each current compressed image ($Ic_n$) and for each truncation point (k) corresponding to a spatial resolution and/or a quality layer available for said image, the following steps:

  • truncating (301) said current compressed image ($Ic_n$) at said truncation point (k) so as to produce a compressed and truncated image ($Ic^k_n$) consuming a bitrate ($D^k_n$);
  • decompressing (302) said compressed key image ($Ic_0$), said current compressed image ($Ic_n$) and said compressed and truncated image ($Ic^k_n$);
  • determining (303) at least one item of movement compensation information between said key truncated image ($I^k_0$) at said truncation point and said current truncated image ($I^k_n$);
  • applying the one or more items of movement compensation information to said key image ($I_0$) so as to obtain a reconstructed image ($IR_n$) with the spatial resolution and/or quality layer of said key image ($I_0$);
  • determining (304) an estimate of the distortion ($\Delta^k_n$) between said reconstructed image ($IR_n$) and said current decompressed image ($In$);

- determining (305), for all of the images ($I_n$) of said video stream (300), apart from the one or more key images ($I_0$), the optimum truncation points ($k^n_{opt}$) that minimise the sum of the distortions $\sum\limits_{n=1}^{N} \Delta_n^{k^n_{opt}}$ and which respect the following inequality

$$\sum\limits_{n=1}^{N} D_n^{k^n_{opt}} < \, \text{, with } D_{target} \text{ being the maximum bitrate that can be consumed by said video stream (300)}$$

and $D_{I0}$ being the bitrate consumed by the one or more key images ($Ic_0$);
- producing a bitrate adapted compressed video stream (310), composed of the one or more key images ($Ic_0$) and compressed and truncated images ($Ic^k_n$) at said optimum truncation points ($k^n_{opt}$).

2. The method according to claim 1, **characterised in that** said distortions ($\Delta^k_n$) are determined by a mean square error computation or PSNR.

3. The method according to claim 1 or 2, **characterised in that** it further comprises the following steps:

- determining (304bis), for each current compressed image ($Ic_n$), for each truncation point (k) and for each output ($R_i$) of correcting codes, taken from a given set of correcting codes, the bitrate $D_n^{i,k} = \dfrac{D_n^k}{R_i}$ consumed by said compressed image ($Ic_n$) protected by said yield correcting code ($R_i$);
- determining (304bis), for each current compressed image ($Ic_n$), for each truncation point (k) and for each output ($R_i$) of correcting codes, an estimate of the distortion ($\Delta^{i,k}_n$) between, on the one hand, an image ($IR_n$) reconstructed from said key image ($I_0$) and said compressed and truncated image ($Ic^k_n$), protected by said correcting code and corrupted with errors with a probability of occurrence $P_{ae}$ that is known and, on the other hand, the decompressed current image ($I_n$);
- determining (305), for all of the images ($I_n$) of said video stream (300), apart from the one or more key images ($I_0$), the optimum yield correcting codes $R_{i^n_{opt}}$ that minimise the sum of the distortions $\sum\limits_{n=1}^{N} \Delta_n^{i^n_{opt}, k^n_{opt}}$

and that respect the following inequality $\sum\limits_{n=1}^{N} D_n^{i^n_{opt}, k^n_{opt}} <$ ;

- producing a bitrate adapted compressed video stream (310), composed of said one or more key images ($Ic_0$)

and of compressed and truncated images ($Ic^k_n$) at said optimum truncation points ($k^n_{opt}$) and protected by said optimum yield correcting codes $R_{i^n_{opt}}$.

4.  The method according to claim 3, **characterised in that** the distortion ($\Delta^{i,k}_n$) is determined using the following relation $\Delta^{i,k}_n = (1 - P^i_{ae})^{T_{n,k,i}} \Delta^k_n + (1 - (1 - P^i_{ae})^{T_{n,k,i}}).\Delta^k_{0,n}$, with $P^i_{ae}$ being the probability of occurrence of error provided for a yield correcting code $R_i$ and a target signal-to-noise ratio, $T_{n,k,i}$, with the size in bits of the truncated compressed image $Ic^k_n$ being protected by said yield correcting code $R_i$ and $\Delta^k_{0,n}$ being the distortion generated when the compressed truncated image $Ic^k_n$ is totally corrupted or lost.

5.  The method according to any one of the preceding claims, **characterised in that** said key image ($I_0$) is initially selected as the first image of said video stream (300) and is updated with said current image ($I_n$) when the distortion ($\Delta^k_n$, $\Delta^{i,k}_n$) exceeds a given threshold.

6.  The method according to any one of the preceding claims, **characterised in that** the images of said video stream (300) are compressed using the M-jpeg 2000 standard.

7.  A device (102) for adapting a bitrate adapted to receive a video stream (300) comprising a plurality of compressed images ($Ic_n$) with a plurality of spatial resolutions and adapted to deliver a compressed video stream (310), the bitrate of which is lower than a target bitrate and for which the average distortion is minimised, said device (102) comprising means adapted to implement the method according to any one of claims 1 to 6.

110                   120

| Codeur source 101 | → | Adaptation débit et/ou ajout protection 102 | → | Décodeur source 103 |

**FIG.1**

$Ic_n$

$Ic_n$

Détermination
image clef $Ic_0$

200

$Ic_0$

Troncature
201

$Ic_n$

$Ic^k_n$

$Ic_n$

Décodage
202

$I_0$

$I^k_n$

Compensation mouvement
203

$I_n$

$IR_n$

Calcul débit/distorsion
204

$\{\Delta^k_n, D^k_n\}$

oui

k< K

non

oui

n < N

non

Choix résolution
205

**FIG.2**

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2944935